# EUROPÄISCHE PATENTSCHRIFT

(11) **EP 1 287 261 B1**
(45) Veröffentlichungstag und Bekanntmachung des Hinweises auf die Patenterteilung: **19.01.2011**
(21) Anmeldenummer: 01903738.1
(22) Anmeldetag: 10.02.2001
(51) Int. Cl.: F15B 15/10

(54) **BETÄTIGUNGSEINRICHTUNG**
ACTUATING DEVICE
DISPOSITIF DE COMMANDE

(30) Priorität: 08.03.2000 DE 20004326 U
(43) Veröffentlichungstag der Anmeldung: 05.03.2003
(73) Patentinhaber: FESTO AG & Co. KG, 73734 Esslingen (DE)
(72) Erfinder: KRIWET, Ansgar, 73760 Ostfildern (DE); LORENZ, Bernd, 73666 Baltmannsweiler (DE)
(74) Vertreter: Abel, Martin
(86) Internationale Anmeldenummer: PCT/EP2001/001468
(87) Internationale Veröffentlichungsnummer: WO 2001/066959

(56) Entgegenhaltungen:
- DE-U- 29 816 100
- US-A- 4 108 050
- US-A- 4 751 869
- US-A- 5 019 121
- US-A- 5 090 297
- US-A- 5 185 932

## Beschreibung

Die Erfindung betrifft eine durch Fluidkraft aktivierbare Betätigungseinrichtung, mit einem sich zwischen zwei beabstandeten Kopfstücken erstreckenden Kontraktionsschlauch, der bei Fluidbeaufschlagung seines Innenraumes radial aufgeweitet wird und dabei gleichzeitig axiale Kontraktionskräfte auf die Kopfstücke überträgt, so dass diese zur Ausführung einer axialen Hubbewegung zueinander hingezogen werden, wobei der Kontraktionsschlauch einen elastisch verformbaren Schlauchkörper enthält, der mit zur Festigkeitserhöhung und/oder zur Kraftübertragung beitragenden Unterstützungsmaßnahmen versehen ist.

Betätigungseinrichtungen dieser Art können beispielsweise die Funktion von Antrieben übernehmen, wobei sie alternativ zu konventionellen fluidbetätigten Arbeitszylinder einsetzbar sind. Bei einer aus der EP 0 161 750 B1 hervorgehenden Bauform sind zwei Kopfstücke durch einen Kontraktionsschlauch miteinander verbunden, der aus einem gummielastischen Schlauchkörper sowie einer den Schlauchkörper koaxial umschließenden, gewebeartigen Strangstruktur zusammensetzt. Die Strangstruktur stellt Unterstützungsmaßnahmen dar, die die Festigkeit des Kontraktionsschlauches erhöhen und gleichzeitig die Übertragung der Kontraktionskräfte auf die Kopfstücke optimieren. Wird der Innenraum des Kontraktionsschlauches mit unter Druck stehendem Fluid beaufschlagt, stellt sich eine radiale Aufweitung ein, wobei gleichzeitig die Kopfstücke einander angenähert werden, wobei sich diese Bewegung zur Betätigung beliebiger Bauteile und/oder Einrichtungen abgreifen lässt. Eine ähnliche Betätigungseinrichtung offenbart die US-A-5,185,932, die außerdem die Möglichkeit beschreibt, die Strangstruktur in den Schlauchkörper einzubetten. Zudem geht aus diesem Dokument die Möglichkeit hervor, den Innenumfang und/oder Außenumfang des Schlauchkörpers unkreisförmig zu konturieren.

Ohne die zur Festigkeitserhöhung und/oder zur Kraftübertragung beitragenden Unterstützungsmaßnahmen bestünde bei einem aus gummielastisch verformbarem Material bestehenden Schlauchkörper das Problem, dass dieser sich bei Druckbeaufschlagung zwar radial aufweiten würde, dies jedoch zu keiner ausreichenden Übertragung von Zugkräften auf die Kopfstücke führen würde und zudem bei zu starker Druckbeaufschlagung die Gefahr eines Zerplatzens entstünde. Andererseits sind der Realisierung der zur Unterstützung dienenden Strangstruktur Grenzen gesetzt, wenn die Betätigungseinrichtung ein gewisses Mindestmaß an Baugröße unterschreitet. Auch durch ein Einbetten der Strangstruktur in das Schlauchkörpermaterial, wie dies außer aus der US-A-5,185,932 beispielsweise auch aus dem deutschen Gebrauchsmuster 299 08 008 hervorgeht, kann dieser Problematik nicht begegnet werden.

Es ist daher die Aufgabe der vorliegenden Erfindung, eine Betätigungseinrichtung der eingangs genannten Art zu schaffen, die bei Bedarf auch eine Realisierung sehr kleiner Baugrößen gestattet.

Zur Lösung dieser Aufgabe ist vorgesehen, dass die Unterstützungsmaßnahmen ohne separate Gewebestruktur ausschließlich wiefolgt realisiert sind:
(a) durch besondere geometrische Formgebung mit am Innenumfang oder am Außenumfang oder sowohl am Innenumfang als auch am Außenumfang unkreisfrömiger Querschnittskontur des Schlauchkörpers
   und/oder
(b) durch mehrere Schlauchkörperbereiche mit sich voneinander unterscheidenden Eigenschaften des Schlauchkörpermaterials.

Somit wird auf ein den Schlauchkörper umhüllendes oder in den Schlauchkörper eingebettetes Stranggewebe verzichtet, weil durch besondere geometrische Formgebung des Schlauchkörpers und/oder durch lokal spezifische Vorgabe besonderer Materialeigenschaften des Schlauchkörpermäterials die notwendige Unterstützung zur Festigkeitserhöhung und/oder zur Kraftübertragung erzielbar ist.

Ausgehend vom Stand der Technik, bei dem die Schlauchkörper eine stets hohlzylindrische Formgebung haben, lassen sich die Unterstützungsmaßnahmen bei einer der erfindungsgemäßen Alternativen durch eine besondere geometrische Formgebung erzielen, wobei am Innenumfang und/oder am Außenumfang des Schlauchkörpers eine unkreisförmige Querschnittskontur realisiert wird. Bei der anderen erfindungsgemäßen Alternative verfügt der Schlauchkörper über mehrere Bereiche, in denen sich die Eigenschaften des Schlauchkörpermaterials voneinander unterscheiden, beispielsweise durch unterschiedliche Festigkeitswerte. Die beiden Alternativlösungen können auch gleichzeitig bei ein und demselben Schlauchkörper realisiert sein.

Vorteilhafte Weiterbildungen der Erfindung gehen aus den Unteransprüchen hervor.

Zur Realisierung der Unterstützungsmaßnahmen kann der Schlauchkörper bereits ursprünglich in einer besonderen, gewünschten Geometrie hergestellt sein, so dass er aus einem vorgeformten Schlauchkörpermaterial besteht, das zweckmäßigerweise über homogene Materialeigenschaften verfügt. Möglich ist es auch, zum Erhalt der Unterstützungsmaßnahmen gewisse Schlauchkörperbereiche vorzusehen, an denen ursprünglich noch vorhandenes Schlauchkörpermaterial durch beispielsweise mechanische und/oder thermische Behandlung abgetragen wurde, oder an denen zum Erhalt der gewünschten Eigenschaften ein Auftrag von Schlauchkörpermaterial erfolgt ist.

Besonders vorteilhaft erscheinende geometrische Formgebungen sehen eine mäanderförmige und/oder eine mehreckförmige Kontur im Bereich des Innen- und/oder Außenumfanges des Schlauchkörpers vor.

Um die gewünschten Unterstützungsmaßnahmen zu erhalten, kann der Schlauchkörper über Schlauchkörperbereiche verfügen, die zum Erhalt unterschiedlicher Materialeigenschaften energetisch bestrahlt wurden. Desweiteren können versprödete und/oder ausvulkanisierte Schlauchkörperbereiche vorgesehen sein, um dem Schlauchkörpermaterial gezielt besondere elastische Eigenschaften aufzuprägen.

Eine weitere vorteilhafte Möglichkeit zur Realisierung der Unterstützungsmaßnahmen besteht darin, den Schlauchkörper aus mehreren stoffschlüssig miteinander verbundenen Materialkomponenten zusammenzusetzen, wobei durch die Eigenschaft der Materialkomponenten das gewünschte Betriebsverhalten des Kontraktionsschlauches vorgegeben werden kann. So kann der Schlauchkörper beispielsweise als Extrusionskörper ausgebildet sein, der aus mehreren gleichzeitig extrudierten Materialkomponenten besteht. Der Schlauchkörper kann eine schlauchartig strukturierte Materialkomponente enthalten, die mit mindestens einer weiteren Materialkomponente beschichtet und/oder bedruckt ist. Mit derartigen Zweistoff- bzw. Mehrstoff-Materialverbindungen lassen sich die gewünschten Materialeigenschaften besonderes gut bereitstellen.

Durch die Unterstützungsmaßnahmen besteht insbesondere auch die Möglichkeit, das Bewegungsverhalten des Kontraktionsschlauches bei Druckbeaufschlagung vorzugeben, beispielsweise um eine reine Axialbewegung, eine reine Drehbewegung oder eine kombinierte Dreh-Linear-Bewegung zu erhalten. Um ein gleichförmiges Betriebsverhalten zu erzielen, ist es jedenfalls von Vorteil, wenn die besonderen Formgebungsmaßnahmen und/oder die Schlauchkörperbereiche unterschiedlicher Materialeigenschaften mit in Umfangsrichtung des Schlauchkörpers regelmäßiger Verteilung angeordnet sind. Insbesondere kann das Schlauchkörpermaterial als Unterstützungsmaßnahmen über mehrere sich zwischen den beiden Kopfstücken erstreckende streifenartige Schlauchkörperbereiche verfügen, die in Längsrichtung ein geringeres Dehnvermögen besitzen als das übrige Schlauchkörpermaterial. Die Unterstützungsmaßnahmen erstrecken sich vorzugsweise ununterbrochen über die gesamte Länge des schlauchkörpers hinweg.

Nachfolgend wird die Erfindung anhand der beiliegenden Zeichnung näher erläutert. In dieser zeigen:
- Figur 1: eine erste Bauform der erfindungsgemäßen Betätigungseinrichtung in schematischer Längsschnittdarstellung in deaktiviertem Zustand, wobei strichpunktiert ein akti- vierter Zustand mit Innendruckbeaufschla- gung des Kontraktionsschlauches angedeutet ist, und
- Figuren 2 bis 6: verschiedene Ausführungsformen des Kontrak- tionsschlauches im Querschnitt gemäß Schnittlinie II-II aus Figur 1.

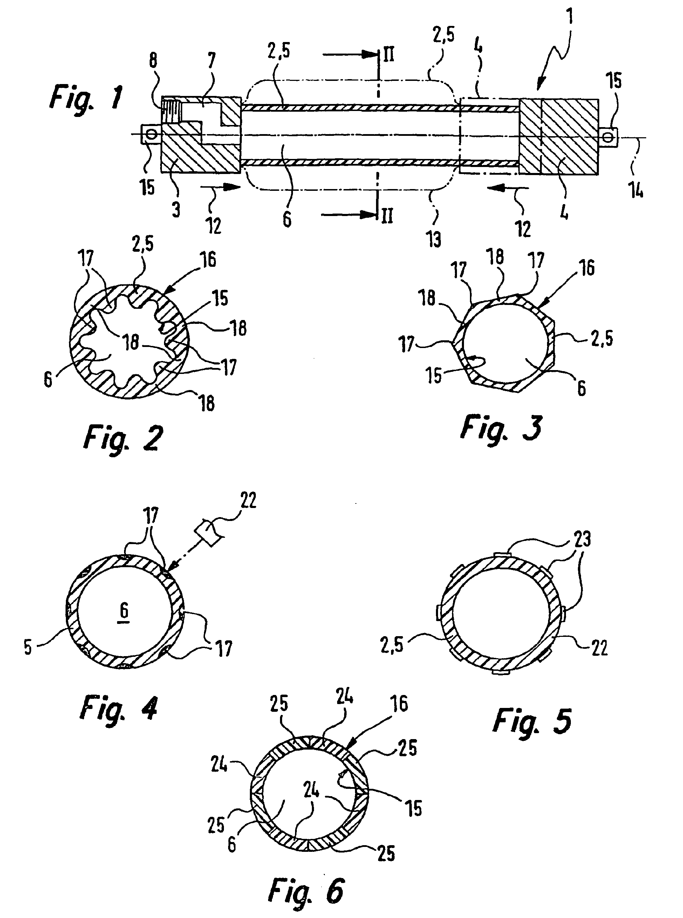

Die in Figur 1 stark schematisiert dargestellte Betätigungseinrichtung 1 enthält zwei mit Abstand zueinander angeordnete Kopfstücke 3, 4, die durch einen eine lineare Erstreckung aufweisenden und als Kontraktionsschlauch 2 bezeichneten Hohlkörper fest miteinander verbunden sind. Der Kontraktionsschlauch 2 besteht aus einem elastisch verformbaren, fluiddichten Schlauchkörper 5, der einen zwischen den beiden Kopfstücken 3, 4 durchgehenden Innenraum 6 definiert, und der mit seinen beiden axialen Endabschnitten an jeweils einem der beiden Kopfstücke 3, 4 unter Abdichtung festgelegt ist. Die Befestigung kann beispielsweise im Rahmen einer Klemmverbindung erfolgen, wie sie exemplarisch in der EP 0 161 750 B1 beschrieben ist. Andere Befestigungsarten wären aber ebenfalls möglich.

In den vom Schlauchkörper 5 und den beiden Kopfstücken 3, 4 begrenzten Innenraum 6 mündet mindestens ein Fluidkanal 7, der eines der Kopfstücke 3 durchsetzt und dessen äußerem Ende eine Anschlusseinrichtung 8 zugeordnet ist, über die eine von einer Druckquelle kommende Fluidleitung angeschlossen werden kann. In Verbindung mit einer zugeordneten Steuerventilanordnung besteht somit die Möglichkeit, durch den Fluidkanal 7 hindurch ein fluidisches Druckmedium in den Innenraum 6 einzuspeisen oder aus diesem abzuführen. Es versteht sich in diesem Zusammenhang, dass die Zufuhr und Abfuhr des Druckmediums auch über separate Fluidkanäle erfolgen kann.

Die Betätigungseinrichtung 1 lässt sich wahlweise mit einem gasförmigen oder einem hydraulischen Fluid betreiben, beispielsweise mit Druckluft oder mit Wasser.

Die Figur 1 zeigt in durchgezogenen Linien den deaktivierten Zustand der Betätigungseinrichtung, wobei der Innenraum 6 drucklos ist. Der Kontraktionsschlauch 2 bzw. Schlauchkörper 5 nimmt hierbei eine Gestalt ein, bei der er über die gesamte Länge hinweg über zumindest im wesentlichen gleiche Querschnittsabmessungen verfügt. Wird die Betätigungseinrichtung aktiviert, also der Innenraum 6 mit Überdruck beaufschlagt, weitet sich der Schlauchkörper 5 radial auf und überträgt gleichzeitig axiale Kontraktionskräfte auf die Kopfstücke 3, 4, so daß diese axial in den durch Pfeile angedeuteten Kontraktionsrichtungen 12 zueinander hingezogen werden. Eine dann vom Schlauchkörper 5 eingenommene Gestalt ist in Figur 1 strichpunktiert bei 13 angedeutet.

Wird die Betätigungseinrichtung deaktiviert, indem der Überdruck im Innenraum 6 entfernt wird, verlagern sich die Kopfstücke 3, 4 mit entgegengesetzter axialer Bewegungsrichtung aufgrund der elastischen Rückstellkräfte des Schlauchkörpers 2 in die in durchgezogenen Linien gezeigte Ausgangsposition zurück. Durch abgestimmte Fluidbeaufschlagung bzw. Fluidabfuhr hinsichtlich des Innenraumes 6 kann somit eine axiale Hubbewegung der Kopfstücke 3, 4 relativ zueinander erzielt werden.

Jedes Kopfstück 3, 4 kann mit Befestigungsmitteln 15 geeigneter Bauart versehen sein, an denen sich Bauteile oder Einrichtungen fixieren lassen, die im Rahmen der erwähnten Relativbewegung der Kopfstücke 3, 4 relativ zueinander bewegt werden sollen. So könnte beispielsweise eines der Kopfstücke 3 an einer Haltestruktur einer Maschine und das andere Kopfstück an einem relativ zu der Haltestruktur zu verlagernden Bauteil der Maschine festgelegt werden.

Der Kontraktionsschlauch 2 bzw. Schlauchkörper 5 ist unmittelbar derart ausgebildet, dass Unterstützungsmaßnahmen vorliegen, die zur Erhöhung der Festigkeit des Schlauchkörpers als solchem und/oder zur Optimierung der Kraftübertragung vom Schlauchkörper 5 auf die beiden Kopfstücke 3, 4 beitragen. Anders als beim Stand der Technik gemäß EP 0 161 750 B1 oder DE 299 08 008 U sehen dabei diese Unterstützungsmaßnahmen keine separate Gewebestruktur vor, sondern betreffen ausschließlich unmittelbar die Formgebung und/oder die Materialeigenschaften des Schlauchkörpers. Dies ermöglicht die Realisierung auch extrem kleinbauende Betätigungseinrichtungen, die sich mangels Gewebefasern entsprechend geringen Durchmessers auf die bisher übliche konventionelle Weise nicht realisieren lassen. Der Grundansatz der Erfindung liegt darin, das Material des Schlauchkörpers selbst in seinen physikalischen Eigenschaften und/oder in der gewählten Formgebung zu beeinflussen bzw. zu ändern, um dann dadurch quasi als Gewebeersatz die für den Betrieb notwendige Festigkeit zu erreichen.

Die Figuren 2 bis 6 zeigen exemplarisch verschiedene alternative Möglichkeiten, um einen Schlauchkörper 5 zu realisieren, dem die gewünschten Unterstützungsmaßnahmen immanent sind.

Die Bauformen gemäß Figuren 2 und 3 zeichnen sich dadurch aus, dass die Unterstützungsmaßnahmen durch besondere geometrische Formgebung mit am Innenumfang 15 und/oder am Außenumfang 16 unkreisförmiger Querschnittskontur des Schlauchkörpers 5 realisiert sind. Während der Schlauchkörper konventioneller Betätigungseinrichtungen hohlzylindrisch ausgeführt ist und sowohl innen als auch außen eine kreisförmige Querschnittskontur aufweist, verfügt der Schlauchkörper 5 gemäß Figur 2 am Innenumfang 15 über eine unkreisförmige Querschnittskontur, wobei beispielhaft ein mäanderförmiger Konturverlauf vorliegt. Der Außenumfang 16 ist weiterhin kreisförmig konturiert, was unter anderem auch die Reinigung vereinfacht.

Bei dem Ausführungsbeispiel der Figur 3 ist der Schlauchkörper 5 mit einem kreiszylindrischen Innenumfang 15 versehen, während der Außenumfang 16 über eine besondere Formgebung verfügt, in dem ein mehreckförmiger Konturverlauf vorliegt.

Durch eine derartige Gestaltung ergeben sich über die gesamte Länge des Schlauchkörpers 5 hinweg verlaufende einzelne erste Schlauchkörperbereiche 17, die mit in Umfangsrichtung des Schlauchkörpers 5 bevorzugt regelmäßiger Verteilung angeordnet sind und die über ein in Längsrichtung geringeres Dehnvermögen verfügen, als die zwischen in Umfangsrichtung des Schlauchkörpers 5 jeweils zwischen zwei aufeinanderfolgenden ersten Schlauchkörperbereichen 17 vorgesehenen zweiten Schlauchkörperbereiche 18, deren radiale Dickenabmessungen geringer sind als diejenigen der ersten Schlauchkörperbereiche 17.

Es versteht sich, dass eine von einer Kreiskontur abweichende geometrische Formgebung auch sowohl am Innenumfang als auch am Außenumfang des Schlauchkörpers 5 vorgesehen sein kann.

Die Formgebung des Schlauchkörpers 5 gemäß Figuren 2 und 3 kann beispielsweise einfach dadurch erhalten werden, dass man den Schlauchkörper 5 von Anfang an in der besonderen Geometrie herstellt und somit auf ein in gewünschter Weise vorgeformtes Schlauchkörpermaterial zurückgreift. Letzteres kann dabei selbst über homogene Materialeigenschaften verfügen.

Eine andere Realisierungsmöglichkeit besteht darin, die zweiten Schlauchkörperbereiche 18 geringerer Wandstärke durch mechanische und/oder thermische Behandlung vom ursprünglich zylindrisch konturierten Schlauchkörpermaterial abzutragen. Alternativ könnten auch verdickten Wandstärkenbereiche des Schlauchkörpers durch einen Schlauchkörpermaterial-Auftrag erzielt werden.

Möglich wäre es auch, durch ein Prägeverfahren unter Verwendung entsprechender Formwerkzeuge eine gewünschte Formgebung zu erhalten.

Bei den Ausführungsbeispielen der Figuren 4 bis 6 bestehen die Unterstützungsmaßnahmen allein oder überwiegend in der Realisierung des Schlauchkörpers 5 mit mehreren Schlauchkörperbereichen, die sich voneinander durch unterschiedliche Materialeigenschafen des Schlauchkörpermaterials unterscheiden.

Beim Ausführungsbeispiel der Figur 4 wurde der Schlauchkörper 5 bei der Herstellung durch eine schematisch angedeutete Strahlungsquelle 22 lokal energetisch bestrahlt oder durch sonstige Maßnahmen versprödet und/oder ausvulkanisiert, so dass sich ununterbrochen über die gesamte Schlauchkörperlänge hinweg erstreckende erste Schlauchkörperbereiche 17 ergeben, in denen das ansonsten über gummielastische Eigenschaften verfügende Schlauchkörpermaterial über eine höhere Festigkeit bzw. Steifigkeit verfügt als das übrigen Schlauchkörpermaterial, das weiterhin über ein hohes elastisches Verformungsvermögen verfügt. Durch dieses Schlauchkörpermaterial ist gewährleistet, dass sich der Schlauchkörper 5 bei Druckbeaufschlagung seines Innenraumes 6 weiterhin radial aufweiten kann, wobei aber durch die in Längsrichtung höhere Festigkeitswerte aufweisenden ersten Schlauchkörperbereiche 17 eine optimale Kraftübertragung zu den Kopfstücken 3, 4 stattfinden kann, so dass diese zu der oben geschilderten Relativbewegung angetrieben werden können.

Auch die sich auf die Materialeigenschaften auswirkenden Maßnahmen sind zweckmäßigerweise regelmäßig über den Umfang des Schlauchkörpers 5 verteilt vorgesehen.

Beim Ausführungsbeispiel der Figur 5 verfügt der Schlauchkörper 5 über eine schlauchartig strukturierte Materialkomponente 22 mit vorzugsweise gummielastischen Eigenschaften, die an der Außenfläche mit mindestens einer weiteren Materialkomponente 23 beschichtet und/oder bedruckt ist. Diese weiteren Materialkomponenten 23 können in jeder erdenklichen geeigneten Verteilung vorgesehen sein, was im übrigen auch für die bei den anderen Ausführungsbeispielen vorhandenen Unterstützungsmaßnahmen gilt, so dass dem Schlauchkörper 5 gezielt ein ganz spezifisches Verformungsverhalten aufgeprägt werden kann.

Für die aufgebrachten weiteren Materialkomponenten 23 kann das gleiche Material wie für die schlauchförmig strukturierte Materialkomponente 22 verwendet werden, so dass im Ergebnis eine besondere geometrische Formgebung vorliegt, die die Unterstützungsmaßnahmen hervorruft. Alternativ bestehen allerdings die weiteren Materialkomponenten 23 vorzugsweise aus Material, dessen Materialeigenschaften von denjenigen der schlauchartig strukturierten Materialkomponente 22 abweichen, insbesondere indem sie eine höhere Steifigkeit bzw. eine geringere Elastizität besitzen, gleichzeitig aber eine sehr hohe Zugfestigkeit aufweisen.

Bei der Ausführungsform der Figur 6 liegt wie bei der Ausführungsform der Figur 5 eine Realisierung des Schlauchkörpers 5 aus mehreren stoffschlüssig fest miteinander verbundenen Materialkomponenten vor, wobei allerdings eine etwas andere Realisierungsform gewählt wurde. So besteht dort der Schlauchkörper 5 aus mehreren bei der Herstellung gleichzeitig extrudierten Materialkomponenten 24, 25, die beim Extrudieren eine innige stoffschlüssige Verbindung eingehen, so dass der Eindruck eines einheitlichen Schlauchmaterials vorherrscht. Indem hier Materialkomponenten 24, 25 mit unterschiedlichen physikalischen Eigenschaften verwendet werden, lassen sich die gewünschten Unterstützungsmaßnahmen sehr einfach herbeiführen.

Beim konkreten Ausführungsbeispiel der Figur 6 nehmen die unterschiedlichen Materialkomponenten 24, 25 jeweils die komplette radiale Wandstärke des Schlauchkörpers 5 ein, sind also vom Außenumfang 16 bis zum Innenumfang 15 des Schlauchkörpers 5 jeweils durchgehend ausgebildet, während beispielsweise bei der Bauform der Figur 4 nur oberflächennahe Bereiche als erste Schlauchkörperbereiche 17 ausgeführt sind. Wiederum wird es aber auch hier zweckmäßig sein, die verschiedenen Materialkomponenten 24, 25 in der Umfangsrichtung des Schlauchkörpers 5 mit regelmäßiger Verteilung vorzusehen.

## Patentansprüche

1. Durch Fluidkraft aktivierbare Betätigungseinrichtung, mit einem sich zwischen zwei beabstandeten Kopfstücken (3, 4) erstreckenden Kontraktionsschlauch (2), der bei Fluidbeaufschlagung seines Innenraumes (6) radial aufgeweitet wird und dabei gleichzeitig axiale Kontraktionskräfte auf die Kopfstücke (3, 4) überträgt, so dass diese zur Ausführung einer axialen Hubbewegung zueinander hingezogen werden, wobei der Kontraktionsschlauch (2) einen elastisch verformbaren Schlauchkörper (5) enthält, der mit zur Festigkeitserhöhung und/oder zur Kraftübertragung beitragenden Unterstützungsmaßnahmen versehen ist, **dadurch gekennzeichnet, dass** die Unterstützungsmaßnahmen ohne separate Gewebestruktur ausschließlich wiefolgt realisiert sind:
(a) durch besondere geometrische Formgebung mit am Innenumfang (15) oder am Außenumfang (16) oder sowohl am Innenumfang (15) als auch am Außenumfang (16) unkreisförmiger Querschnittskontur des Schlauchkörpers (5) und/oder
(b) durch mehrere Schlauchkörperbereiche (17, 18, 24, 25) mit sich voneinander unterscheidenden Eigenschaften des Schlauchkörpermaterials.

2. Betätigungsvorrichtung nach Anspruch 1, **dadurch gekennzeichnet, dass** der Schlauchkörper (5) zum Erhalt der besonderen geometrischen Formgebung aus einem vorgeformten und vorzugsweisen homogenen Schlauchkörpermaterial besteht.

3. Betätigungsvorrichtung nach Anspruch 1 oder 2, **dadurch gekennzeichnet, dass** der Schlauchkörper (5) zum Erhalt der besonderen geometrischen Formgebung über Schlauchkörperbereiche (18) verfügt, an denen Schlauchkörpermaterial vom Schlauchkörper (5) abgetragen wurde, beispielsweise durch mechanische und/oder thermische Behandlung.

4. Betätigungsvorrichtung nach einem der Ansprüche 1 bis 3, **dadurch gekennzeichnet, dass** der Schlauchkörper (5) zum Erhalt der besonderen geometrischen Formgebung über Schlauchkörperbereiche (17, 23) verfügt, an denen Schlauchkörpermaterial aufgetragen wurde.

5. Betätigungsvorrichtung nach einem der Ansprüche 1 bis 4, **dadurch gekennzeichnet, dass** der Schlauchkörper innen und/oder außen im Querschnitt gesehen zumindest partiell mäanderförmig und/oder mehreckförmig konturiert ist.

6. Betätigungsvorrichtung nach einem der Ansprüche 1 bis 5, **dadurch gekennzeichnet, dass** zur Realisierung unterschiedlicher Materialeigenschaften energetisch bestrahlte Schlauchkörperbereiche (17) vorgesehen sind.

7. Betätigungsvorrichtung nach einem der Ansprüche 1 bis 6, **dadurch gekennzeichnet, dass** zur Realisierung unterschiedlicher Materialeigenschaften versprödete oder ausvulkanisierte Schlauchkörperbereiche (17) vorgesehen sind.

8. Betätigungsvorrichtung nach einem der Ansprüche 1 bis 6, **dadurch gekennzeichnet, dass** der Schlauchkörper (5) zur Realisierung lokal unterschiedlicher Materialeigenschaften aus mehreren stoffschlüssig miteinander verbundenen Materialkomponenten (22, 23; 24, 25) besteht.

9. Betätigungsvorrichtung nach Anspruch 8, **dadurch gekennzeichnet, dass** der Schlauchkörper als aus mehreren gemeinsam extrudierten Materialkomponenten (24, 25) bestehender Extrusionskörper ausgebildet ist.

10. Betätigungsvorrichtung nach Anspruch 8 oder 9, **dadurch gekennzeichnet, dass** der Schlauchkörper (5) eine schlauchartig strukturierte Materialkomponente (22) enthält, die mit mindestens einer weiteren Materialkomponente (23) beschichtet und/oder bedruckt ist.

11. Betätigungsvorrichtung nach einem der Ansprüche 7 bis 10, **dadurch gekennzeichnet, dass** sich das Schlauchkörpermaterial aus mehreren Materialkomponenten mit untereinander verschiedenen Materialeigenschaften zusammensetzt.

12. Betätigungsvorrichtung nach einem der Ansprüche 1 bis 11, **dadurch gekennzeichnet, dass** die unterschiedlichen Eigenschaften des Schlauchkörpermaterials in unterschiedlichen Steifigkeiten und/oder Elastizitäten und/oder Zugfestigkeiten bestehen.

13. Betätigungsvorrichtung nach einem der Ansprüche 1 bis 12, **dadurch gekennzeichnet, dass** die besonderen Formgebungsmaßnahmen und/oder die Schlauchkörperbereiche unterschiedlicher Materialeigenschaften mit in Umfangsrichtung des Schlauchkörpers (5) regelmäßiger Verteilung angeordnet sind.

14. Betätigungsvorrichtung nach einem der Ansprüche 1 bis 13, **dadurch gekennzeichnet, dass** das Schlauchkörpermaterial als Unterstützungsmaßnahmen über mehrere sich zwischen den beiden Kopfstücken (3, 4) erstreckende und vorzugsweise streifenartige Schlauchkörperbereiche (17, 23, 25) verfügt, die in Längsrichtung ein geringeres Dehnvermögen besitzen als das übrige Schlauchkörpermaterial.

15. Betätigungsvorrichtung nach einem der Ansprüche 1 bis 14, **dadurch gekennzeichnet, dass** sich die Unterstützungsmaßnahmen ununterbrochen über die gesamte Länge des Schlauchkörpers (5) hinweg erstrecken.

## Claims

1. Actuating device activated by fluid power, comprising a contraction tube (2) extending between two head pieces (3 4), which is radially expanded if fluid is admitted to its interior (6) while simultaneously transmitting axial contraction forces to the head pieces (3, 4), so that they are pulled towards each other to perform an axial stroking movement, wherein the contraction tube (2) has a tubular body (5) capable of elastic deformation, which is provided with support measures contributing to an increase in its strength and/or to power transmission, **characterised in that** the supporting measures are exclusively implemented as follows without any separate fabric structure:
(a) by a special geometric shaping with a non-circular cross-sectional contour of the tubular body (5) at the inner circumference (15) or at the outer circumference (16) or both at the inner circumference (15) and at the outer circumference (16)
and/or
(b) by a plurality of tubular body regions (17, 18, 24, 25) with different properties of the tubular body material.

2. Actuating device according to claim 1, **characterised in that** the tubular body (5) is made of a pre-shaped and preferably homogenous tubular body material to obtain its special geometric shaping.

3. Actuating device according to claim 1 or 2, **characterised in that** the tubular body (5), to obtain its special geometric shaping, has tubular body regions (18) where tubular body material has been removed from the tubular body (5), for example by mechanical and/or thermal treatment.

4. Actuating device according to any of claims 1 to 3, **characterised in that** the tubular body (5), to obtain its special geometric shaping, has tubular body regions (17, 23) where tubular body material has been applied.

5. Actuating device according to any of claims 1 to 4, **characterised in that** the tubular body has an inner and/or outer cross-section with an at least partially meandering or polygonal contour.

6. Actuating device according to any of claims 1 to 5, **characterised in that** energetically irradiated tubular body regions (17) are provided to obtain different material properties.

7. Actuating device according to any of claims 1 to 6, **characterised in that** embrittled or fully cured body regions (17) are provided to obtain different material properties.

8. Actuating device according to any of claims 1 to 6, **characterised in that** the tubular body (5) consists of a plurality of material components (22, 23; 24, 25) joined together by adhesive force to obtain locally different material properties.

9. Actuating device according to claim 8, **characterised in that** the tubular body is designed as an extruded body consisting of a plurality of coextruded material components (24, 25).

10. Actuating device according to claim 8 or 9, **characterised in that** the tubular body (5) includes a material component (22) having a tubular structure, which is coated and/or printed with a further material component (23).

11. Actuating device according to any of claims 7 to 10, **characterised in that** the tubular body material is made up from a plurality of material components having different material properties.

12. Actuating device according to any of claims 1 to 11, **characterised in that** the different properties of the tubular body material are different rigidities and/or elasticities and/or tensile strengths.

13. Actuating device according to any of claims 1 to 13, **characterised in that** the special shaping measures and/or the tubular body regions having different material properties are evenly distributed in the circumferential direction of the tubular body (5).

14. Actuating device according to any of claims 1 to 12, **characterised in that** the tubular body material comprises as a support measure a plurality of preferably strip-like tubular body regions (17, 23, 25) which extend between the two head pieces (3, 4) and which have a lower expandability in the longitudinal direction than the rest of the tubular body material.

15. Actuating device according to any of claims 1 to 14, **characterised in that** the support measures extend continuously along the entire length of the tubular body (5).

## Revendications

1. Dispositif de commande activable par la force d'un fluide, avec un tuyau de contraction (2) s'étendant entre deux organes de tête (3, 4) espacés, qui est élargi radialement en cas d'exposition de son intérieur (6) à un fluide et transmet alors simultanément des forces de contraction axiales aux organes de tête (3, 4), de sorte que ceux-ci sont tirés l'un vers l'autre pour effectuer un mouvement axial, le tuyau de contraction (2) contenant un corps de tuyau (5) déformable élastiquement, qui est muni de mesures de soutien contribuant à augmenter la résistance et/ou à transmettre les forces, **caractérisé en ce que** les mesures de soutien sont réalisées exclusivement comme suit, sans structure textile séparée:
(a) par une forme géométrique particulière avec un contour de section du corps de tuyau (5) non circulaire sur la circonférence intérieure (15) ou sur la circonférence extérieure (16) ou à la fois sur la circonférence intérieure (15) et sur la circonférence extérieure (16), et/ou
(b) par plusieurs zones de corps de tuyau (17, 18, 24, 25) ayant des propriétés différentes pour le matériau de corps de tuyau.

2. Dispositif de commande selon la revendication 1, **caractérisé en ce que** le corps de tuyau (5) est constitué, pour conserver la forme géométrique particulière, dans un matériau de corps de tuyau préformé et de préférence homogène.

3. Dispositif de commande selon la revendication 1 ou 2, **caractérisé en ce que** le corps de tuyau (5) dispose, pour conserver la forme géométrique particulière, de zones de corps de tuyau (18) au niveau desquelles du matériau de corps de tuyau a été retiré du corps de tuyau (5), par exemple par un traitement mécanique et/ou thermique.

4. Dispositif de commande selon l'une des revendications 1 à 3, **caractérisé en ce que** le corps de tuyau (5) dispose, pour conserver la forme géométrique particulière, de zones de corps de tuyau (17, 23) au niveau desquelles du matériau de corps de tuyau a été ajouté.

5. Dispositif de commande selon l'une des revendications 1 à 4, **caractérisé en ce que** le corps de tuyau présente à l'intérieur et/ou à l'extérieur, en coupe transversale, un contour au moins partiellement en forme de méandre et/ou de polygone.

6. Dispositif de commande selon l'une des revendications 1 à 5, **caractérisé en ce que**, pour réaliser différentes propriétés de matériau, des zones de corps de tuyau (17) irradiées énergétiquement sont prévues.

7. Dispositif de commande selon l'une des revendications 1 à 6, **caractérisé en ce que**, pour réaliser différentes propriétés de matériau, des zones de corps de tuyau (17) fragilisées ou vulcanisées sont prévues.

8. Dispositif de commande selon l'une des revendications 1 à 6, **caractérisé en ce que**, pour réaliser différentes propriétés de matériau, le corps de tuyau (5) est constitué de plusieurs composants de matériaux (22, 23 ; 24, 25) reliés entre eux par venue de matière.

9. Dispositif de commande selon la revendication 8, **caractérisé en ce que** le corps de tuyau est réalisé sous la forme d'un corps extrudé constitué de plusieurs composants de matériau (24, 25) extrudés en commun.

10. Dispositif de commande selon la revendication 8 ou 9, **caractérisé en ce que** le corps de tuyau (5) comprend un composant de matériau (22) structuré à la manière d'un tuyau, qui est revêtu et/ou imprimé avec au moins un autre composant de matériau (23).

11. Dispositif de commande selon l'une des revendications 7 à 10, **caractérisé en ce que** le matériau de corps de tuyau se compose de plusieurs composants de matériau ayant des propriétés de matériau différentes.

12. Dispositif de commande selon l'une des revendications 1 à 11, **caractérisé en ce que** les propriétés différentes du matériau de corps de tuyau sont des rigidités différentes et/ou des élasticités différentes et/ou des résistances à la traction différentes.

13. Dispositif de commande selon l'une des revendications 1 à 12, **caractérisé en ce que** les mesures de formage particulières et/ou les zones de corps de tuyau ayant des propriétés de matériau différentes sont disposées suivant une répartition régulière dans la direction circonférentielle du corps de tuyau (5).

14. Dispositif de commande selon l'une des revendications 1 à 13, **caractérisé en ce que** le matériau de corps de tuyau dispose, comme mesures de soutien, de plusieurs zones de corps de tuyau (17, 23, 25) s'étendant entre les deux organes de tête (3, 4) et de préférence de type bandes, qui possèdent dans la direction longitudinale une capacité d'extension moindre que le reste du matériau de corps de tuyau.

15. Dispositif de commande selon l'une des revendications 1 à 14, **caractérisé en ce que** les mesures de soutien s'étendent de manière ininterrompue sur toute la longueur du corps de tuyau (5).
